(19) Europäisches Patentamt
European Patent Office
Office européen des brevets

(11) **EP 4 586 112 A1**

(12) **EUROPÄISCHE PATENTANMELDUNG**

(43) Veröffentlichungstag:
**16.07.2025  Patentblatt 2025/29**

(21) Anmeldenummer: **24218360.6**

(22) Anmeldetag: **09.12.2024**

(51) Internationale Patentklassifikation (IPC):
*G06F 17/18* *(2006.01)*

(52) Gemeinsame Patentklassifikation (CPC):
**G06F 17/18**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität:  **15.01.2024  DE 102024200335**

(71) Anmelder: **Siemens Aktiengesellschaft**
**80333 München (DE)**

(72) Erfinder:
• **Haag, Aaron**
  **69256 Mauer (DE)**
• **Lohse, Oliver**
  **85614 Kirchseeon (DE)**

(74) Vertreter: **Siemens Patent Attorneys**
**Postfach 22 16 34**
**80506 München (DE)**

(54) **BESTIMMUNG EINER VERTEILUNGSFUNKTION**

(57)     Verfahren zur Bestimmung einer statistischen Verteilungsfunktion und zur Bestimmung von Parametern für die Verteilungsfunktion, mit denen eine Zeitreihe von Messdaten darstellbar ist, bei dem
- für eine vorgegebene Menge von statistischen Verteilungsfunktionen für jede Verteilungsfunktion eine erste Wahrscheinlichkeit dafür bestimmt wird, dass die Messdaten eine Verteilung entsprechend dieser Verteilungsfunktion aufweisen,
- eine zweite Wahrscheinlichkeit bestimmt wird, dass die Messdaten einer zeitlich stationären Quelle entstammen,
- für die vorgegebene Menge von Verteilungsfunktionen für jede Verteilungsfunktion aus der zugeordneten ersten Wahrscheinlichkeit, aus einer zeitlichen Veränderlichkeit der Verteilungsfunktion und der zweiten Wahrscheinlichkeit eine Bewertungsgröße für die jeweilige Verteilungsfunktion bestimmt wird,
- anhand der Bewertungsgröße eine Verteilungsfunktion aus der Menge der Verteilungsfunktionen als passende Verteilungsfunktion für die Messdaten ausgewählt wird,
- Parameter für die Darstellung der Messdaten für die ausgewählte Verteilungsfunktion ermittelt werden.

FIG 3

EP 4 586 112 A1

**Beschreibung**

Die Erfindung betrifft ein Verfahren zur Bestimmung einer Verteilungsfunktion und zur Bestimmung von Parametern für die Verteilungsfunktion, mit denen eine Zeitreihe von Messdaten beschreibbar ist.

Für die Qualitätsüberwachung mittels Maschinen- und Prozessfähigkeitsanalyse werden in der Fertigung und Montage kontinuierlich Messwerte erfasst, die sich auf bestimmte Eigenschaften der Werkstücke beziehen, beispielsweise Bohrungsdurchmesser oder Rauheit. Auf Basis der resultierenden Zeitreihe einer solchen Eigenschaft wird diejenige Verteilungsfunktion bestimmt, die die Zeitreihe am besten beschreibt.

Die Verteilungsfunktion bezeichnet dabei einen Typ einer statistischen Verteilung, beispielsweise eine Normalverteilung oder Weibull-Verteilung. Die Verteilung wird durch einen Funktionsterm mit definierten Parametern beschrieben, beispielsweise für die Normalverteilung:

$$f(x) = \frac{1}{\sigma\sqrt{2\pi}} \cdot exp\left[-\frac{1}{2} \cdot \left(\frac{x-\mu}{\sigma}\right)^2\right]$$

Die Parameter der Normalverteilung sind $\mu$ (Mittelwert) und $\sigma$ (Standardabweichung). Die Verteilungsfunktion f(x) liefert als Ergebnis für einen bestimmten eingesetzten Eingangswert x die Wahrscheinlichkeit für das Auftreten dieses Eingangswerts x. Die Verteilung kann dabei zeitlich stationär sein, zeitlich nicht-stationär oder eine Mischform aufweisen, beispielsweise blockweise zeitlich stationär. Eine zeitlich nicht-stationäre Verteilung weist Parameter auf, die zeitlich nicht konstant sind. Beispielsweise kann der Mittelwert zeitlich veränderlich sein, also $\mu = \mu(t)$.

Zur Ermittlung der Verteilungsfunktion kann zunächst die Klasse der Verteilungsfunktion der Zeitreihe geschätzt werden und dann deren Parameter mithilfe von Maximum-Likelihood-Schätzern oder anderen Algorithmen bestimmt werden. Die Verteilungsfunktion wird dann herangezogen, um die Prozessfähigkeit des Fertigungs- bzw. Montageprozesses zu bestimmen, beispielsweise anhand der Quantile der Verteilungsfunktion. Eine zuverlässige Aussage über die Fähigkeit hängt davon ab, wie gut die geschätzte Klasse der Verteilungsfunktion zum tatsächlichen Verhalten der Messwerte passt.

In einer bekannten Vorgehensweise werden für jede bekannte Verteilungsfunktion basierend auf den Messwerten jeweilige Parameter bestimmt, die die Messwerte bestmöglich beschreiben. Danach wird ein Anpassungsgüte-Test, beispielsweise ein Pearson-Chi-Quadrat-Test, durchgeführt und diejenige Verteilungsfunktion ausgewählt, die die höchste Anpassungsgüte aufweist.

Diese Methode benötigt eine hohe Rechenkapazität, da die Parameter aller bekannten Verteilungen geschätzt werden müssen. Dabei muss der zeitliche Verlauf der Parameter durch weitere Schätzer überwacht werden.

Es ist Aufgabe der Erfindung, ein verbessertes Verfahren zur Bestimmung einer Verteilungsfunktion und zur Bestimmung von Parametern für die Verteilungsfunktion anzugeben, mit denen die beschriebenen Nachteile vermindert werden. Insbesondere soll die benötigte Rechenkapazität gesenkt werden.

Diese Aufgabe wird durch ein Verfahren mit den in Anspruch 1 angegebenen Merkmalen gelöst. Weiterhin wird die Aufgabe durch eine Vorrichtung mit den Merkmalen von Anspruch 12 gelöst.

Das erfindungsgemäße Verfahren dient zur Bestimmung einer statistischen Verteilungsfunktion und zur Bestimmung von Parametern für diese Verteilungsfunktion, wobei mit der Verteilungsfunktion und den so bestimmten Parametern eine Zeitreihe von Messdaten darstellbar ist. Unter darstellbar wird dabei verstanden, dass das Auftreten der Messdaten statistisch eine gute Übereinstimmung mit der Vorhersage durch die Verteilungsfunktion aufweist. Da es sich bei den Messdaten nur um eine endliche Menge von Werten handelt, kann diese Übereinstimmung nicht mathematisch exakt abgegrenzt werden. Je nach der Art und Menge der Messdaten können diese daher auch von verschiedenen Verteilungsfunktionen ähnlich gut dargestellt werden können. Unter Parametern der Verteilungsfunktion werden diejenigen festen Zahlenwerte oder zeitabhängigen Zahlenwerte verstanden, die festgelegt werden müssen, sodass die Verteilungsfunktion nur noch von x oder im Falle der zeitabhängigen Verteilungsfunktion zusätzlich von der Zeit t abhängig ist, ansonsten aber keine Unbekannten aufweist.

Bei dem Verfahren wird für eine vorgegebene Menge von statistischen Verteilungsfunktionen für jede Verteilungsfunktion eine erste Wahrscheinlichkeit dafür bestimmt, dass die Messdaten eine Verteilung entsprechend dieser Verteilungsfunktion aufweisen.

Weiterhin wird eine zweite Wahrscheinlichkeit bestimmt, dass die Messdaten einer zeitlich stationären Quelle entstammen. Unter einer zeitlich stationären Quelle wird verstanden, dass die Verteilung der Messdaten keiner zeitlichen Änderung unterliegt, wenn auch jeder Wert der Messdaten selbst der statistischen Verteilung unterliegen. Mit anderen Worten würde eine Aufnahme von Messdaten zu verschiedenen Zeiten zwar nicht dieselben Messdaten erzeugen, da diese statistisch verteilt sind, es ließe sich aber bei ausreichender Zahl von Messdaten kein Unterschied zwischen deren statistischer Verteilung feststellen.

Es versteht sich, dass die beiden Wahrscheinlichkeiten jeweils Werte von 0 bis 1 annehmen.

Ferner wird für jede Verteilungsfunktion aus der vorgegebenen Menge von Verteilungsfunktionen aus der zugeordneten ersten Wahrscheinlichkeit, aus einer zeitlichen Veränderlichkeit der Verteilungsfunktion selbst und der zweiten Wahrscheinlichkeit eine Bewertungsgröße für die jeweilige Verteilungsfunktion bestimmt.

Schließlich wird anhand der Bewertungsgröße eine Verteilungsfunktion aus der Menge der Verteilungsfunktionen als passende Verteilungsfunktion für die Messdaten ausgewählt. Folgend werden Parameter für die Darstellung der Messdaten für die ausgewählte Verteilungsfunktion ermittelt.

Die erfindungsgemäße Vorrichtung zur Bestimmung einer statistischen Verteilungsfunktion und zur Bestimmung von Parametern für die Verteilungsfunktion, mit denen eine Zeitreihe von Messdaten darstellbar ist, ist eingerichtet zur Durchführung des erfindungsgemäßen Verfahrens.

Die Menge an Verteilungsfunktionen kann beispielsweise die Normalverteilung, logarithmische Normalverteilung, Betragsverteilung 1.Art, Weibull-Verteilung und Rayleigh-Verteilung umfassen. Weiterhin kann die Menge auch definierte Mischungen aus den vorgenannten und anderen Verteilungen enthalten.

Vorteilhafte Ausgestaltungen des erfindungsgemäßen Verfahrens und der Vorrichtung gehen aus den abhängigen Ansprüchen hervor. Dabei kann die Ausführungsform der unabhängigen Ansprüche mit den Merkmalen eines der Unteransprüche oder vorzugsweise auch mit denen aus mehreren Unteransprüchen kombiniert werden. Demgemäß können noch zusätzlich folgende Merkmale vorgesehen werden:

Für die Ermittlung der Bewertungsgröße wird bevorzugt folgende Vorgehensweise verwendet:

Falls die Verteilungsfunktion eine zeitlich nicht-stationäre Verteilungsfunktion ist, wird ihre erste Wahrscheinlichkeit mit der zweiten Wahrscheinlichkeit multipliziert, um die Bewertungsgröße zu erhalten. Zweckmäßig ist die Bewertungsgröße das Produkt aus erster und zweiter Wahrscheinlichkeit.

Falls die Verteilungsfunktion eine zeitlich stationäre Verteilungsfunktion ist, wird ihre erste Wahrscheinlichkeit mit der inversen zweiten Wahrscheinlichkeit multipliziert, um die Bewertungsgröße zu erhalten. Zweckmäßig ist die Bewertungsgröße in diesem Fall das Produkt aus erster und inverser zweiter Wahrscheinlichkeit. Die inverse zweite Wahrscheinlichkeit $p_{2inv}$ zur zweiten Wahrscheinlichkeit $p_2$ ist $p_{2inv} = 1 - p_2$.

Andernfalls wird die erste Wahrscheinlichkeit verwendet, um die Bewertungsgröße zu erhalten. Zweckmäßig ist die Bewertungsgröße in diesem Fall die erste Wahrscheinlichkeit.

Bevorzugt wird die zweite Wahrscheinlichkeit unter Verwendung eines ersten neuronalen Netzwerks bestimmt. Vorteilhaft kann hier das neuronale Netzwerk verhältnismäßig einfach anhand von künstlich erzeugten Verteilungen trainiert werden und gibt dann effizient ein Ergebnis, ohne dass dafür ein konkreter Algorithmus entwickelt werden muss. Es versteht sich, dass es sich bei dem neuronalen Netzwerk um ein künstliches, computerimplementiertes Netzwerk handelt.

Vorteilhaft wird mittels einer Abtastung aus der Zeitreihe ein Messdatenvektor ermittelt, dessen Anzahl von Elementen der Anzahl der Eingangsknoten des ersten neuronalen Netzwerks entspricht. Dadurch wird die Menge der Messdaten an die Gegebenheiten des ersten neuronalen Netzwerks angepasst und das neuronale Netzwerk selbst muss nicht so gestaltet werden, dass es mit einer variablen Zahl von Messdaten umgehen kann. Dadurch wird die Erstellung des ersten neuronalen Netzwerks deutlich vereinfacht.

Ein Training des ersten neuronalen Netzwerks wird bevorzugt mit einer Mehrzahl von Datensätzen vorgenommen, von denen ein erster Teil zufällig ermittelte Werte einer zeitlich stationären statistischen Verteilungsfunktion enthält und von denen ein zweiter Teil zufällig ermittelte Werte einer zeitlich nicht-stationären Verteilungsfunktion enthält. Zweckmäßig werden dabei alle Verteilungsfunktionen aus der vorgegebenen Menge von Verteilungsfunktionen verwendet und eine Vielzahl von Datensätzen erzeugt. Zeitlich nicht-stationäre Verteilungsfunktionen enthalten zeitabhängige Parameter, beispielsweise einen zeitlich veränderlichen Mittelwert. Zeitlich stationäre Verteilungsfunktionen enthalten nur feste Parameter (Zahlen) und deren Funktion enthält somit als einzige Variable den Eingangswert x.

Zweckmäßig wird für die Messdaten eine Kerndichteschätzung durchgeführt. Das Ergebnis der Kerndichteschätzung wird bevorzugt als Eingangsgröße für ein zweites neuronales Netzwerk verwendet, dessen Ausgangswerte die ersten Wahrscheinlichkeiten sind. Für die Kerndichteschätzung kann die Scott-Bandbreite als Kerndichte verwendet werden. Das Ergebnis der Kerndichteschätzung ist bevorzugt ein Datenvektor mit einer Anzahl von Elementen, die der Intervallbreite zwischen kleinstem und größtem Messwert geteilt durch eine gewählte Bandbreite ist. Vorteilhaft ist es, wenn die Anzahl der Eingangsknoten des zweiten neuronalen Netzwerks dieser Anzahl von Elementen entspricht. Hierdurch wird wieder eine deutliche Vereinfachung für den Aufbau des zweiten neuronalen Netzwerks erreicht.

Vorteilhaft ist, wenn die Anzahl der Ausgangsknoten des zweiten neuronalen Netzwerks der Anzahl von Verteilungsfunktionen in der vorgegebenen Menge von Verteilungsfunktionen entspricht. Dadurch kann die Ausgabe des zweiten neuronalen Netzwerks direkt mit Bezug auf die Menge der Verteilungsfunktionen interpretiert werden.

Für die Ermittlung der Parameter kann eine Maximum-Likelihood-Schätzung vorgenommen werden. Bevorzugt werden die Messdaten vor der Verarbeitung normalisiert werden, beispielsweise in das Intervall [0, 1]. Dadurch wird erreicht, dass die neuronalen Netzwerke auch nur für den Umgang mit Messwerten in diesem Intervall ausgelegt und trainiert werden müssen, wodurch der Aufbau der neuronalen Netzwerke vereinfacht wird.

Im Folgenden wird die Erfindung anhand der in den Figuren dargestellten Ausführungsbeispiele näher beschrieben und erläutert. Es zeigen:

Figur 1 schematisch die Bestimmung eines ersten Datensatzes aus einer Zeitreihe von Messdaten,

Figur 2 schematisch die Bestimmung eines zweiten Datensatzes aus der Zeitreihe von Messdaten,

Figur 3 schematisch die Auswahl einer Verteilungsfunktion aus dem ersten und zweiten Datensatz,

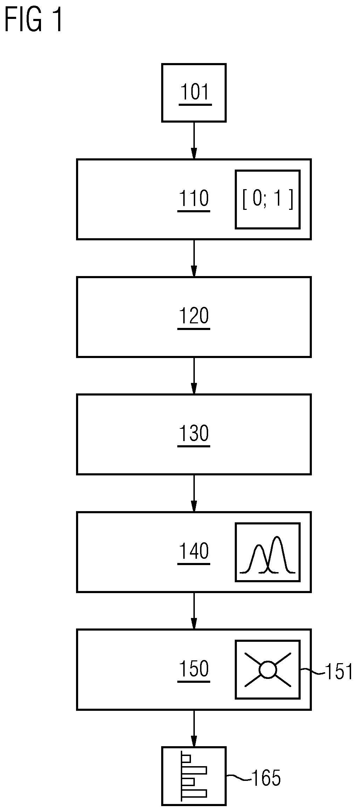

Figur 1 zeigt schematisch die Bestimmung eines ersten Datensatzes 165 aus einer Zeitreihe 101 von Messwerten $m_i$. Die Zeitreihe 101 ist dabei eine Eingangsgröße für das Verfahren und wird beispielsweise durch einen Sensor in einer Maschine bereitgestellt, beispielsweise einen Drucksensor oder Drehzahlmesser.

In einem ersten Schritt 110 wird die Zeitreihe 101 der Messwerte $m_i$ normalisiert. Bei diesem Schritt werden die Messwerte $m_i$ so modifiziert, dass sie alle in den Wertebereich [0; 1] fallen. Dazu wird ein maximaler und ein minimaler Messwert $m_{max}$ und $m_{min}$ ermittelt und aus diesen der Mittelwert $m_m = (m_{max} + m_{min}) / 2$ gebildet. Für jeden Messwert wird $m_{norm,i} = 2 \cdot (m_i - m_m) / (m_{max} - m_{min})$ als normierter Messwert gebildet. In bestimmten Fällen, beispielsweise bei Messwerten, die natürliche obere oder untere Grenzen haben, kann eine andere Form der Normierung in Frage kommen.

In einem zweiten Schritt 120 wird die Scott-Bandbreite $s_{bw}$ für die normierten Messdaten $m_{norm,i}$ ermittelt gemäß :

$$h = \frac{3{,}49\sigma}{\sqrt[3]{n}}$$

Dabei ist $\sigma$ die Standardabweichung der Messdaten $m_{norm,i}$ und n die Anzahl der Messdaten $m_{norm,i}$. Diese wird in einem dritten Schritt 130 verwendet, um die Lage von einer festgelegten Anzahl von $N_K$ Basiswerten zu bestimmen.

In einem vierten Schritt 140 wird eine Kerndichteschätzung für die $N_K$ Basiswerte vorgenommen. Diese erzielt im Ergebnis $N_K$ Werte für die jeweilige Dichte. Diese Werte werden in einem fünften Schritt 150 einem zweiten neuronalen Netzwerk 151 als Eingangswerte zugeführt. Das zweite neuronale Netzwerk 151 hat zu diesem Zweck genau $N_K$ Eingangsknoten. Die Anzahl an $N_K$ Werten wird deshalb für jede Zeitreihe von Messdaten gleichermaßen verwendet.

Das zweite neuronale Netzwerk 151 ist trainiert, für alle Verteilungsfunktionen einer vorgegebenen Menge aus Verteilungsfunktionen aus den Eingangsdaten eine Abschätzung zu erzeugen, mit welcher Wahrscheinlichkeit die Zeitreihe 101 durch eine jeweilige Verteilungsfunktion beschreibbar ist oder mit anderen Worten, wie gut die Übereinstimmung der Eingangsdaten mit der Verteilungsfunktion ist. Die Ausgangswerte des zweiten neuronalen Netzwerks 151 sind daher ein erster Datensatz mit k ersten Wahrscheinlichkeiten $p_{1,i}$, wobei $p_{1,i}$ die Wahrscheinlichkeit dafür angibt, dass die i-te Verteilungsfunktion den Prozess gut beschreibt, der den Messdaten $m_i$ zugrunde liegt.

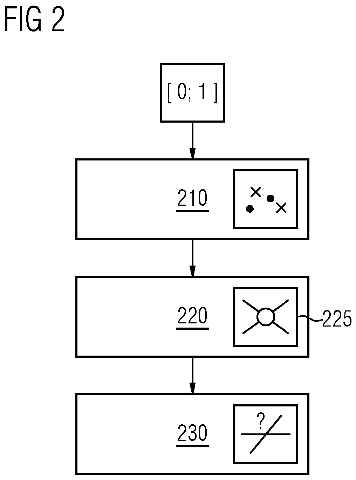

Der so erhaltene erste Datensatz 165 wird später zusammen mit einer zweiten Information verarbeitet, die in einem Verfahren gemäß Figur 2 ermittelt wird.

Das Verfahren gemäß Figur 2 beginnt mit dem Satz von normierten Messwerten $m_{norm,i}$, der im ersten Schritt 110 gemäß Figur 1 bestimmt wird. Das Verfahren gemäß Figur 2 schließt also an den ersten Schritt 110 an.

In einem ersten Schritt 210 wird eine Neu-Abtastung (Resampling / Downsampling) der normierten Messwerte $m_{norm,i}$ vorgenommen. Diese wird so durchgeführt, dass im Ergebnis ein Vektor 215 mit einer fest vorgegebenen Anzahl $N_m$ von normierten Messwerten $m_{norm,i}$ verbleibt. Die fest vorgegebene Anzahl $N_m$ kann dabei größer oder kleiner als die tatsächlich vorhandene Anzahl Messwerte $m_{norm,i}$ sein.

Der so erhaltene Vektor 215 wird in einem zweiten Schritt 220 einem ersten neuronalen Netzwerk 225 zugeführt. Das erste neuronale Netzwerk 225 weist genau $N_m$ Eingangsknoten auf, denen je einer der Werte des Vektors 215 als Eingangswert zugeführt wird. Das erste neuronale Netzwerk 225 ist so ausgestaltet, dass es als Ergebnis eine Abschätzung liefert, ob die Messwerte $m_{norm,i}$, die als Eingangswerte an den Eingangsknoten vorliegen, einer zeitlich stationären Verteilungsfunktion entstammen oder einer zeitlich nicht-stationären.

Das erste neuronale Netzwerk 225 verfügt dafür über zwei Ausgangsknoten, wovon ein erster einen Wert $o_1$ für die Wahrscheinlichkeit für eine zeitlich stationäre Verteilungsfunktion und der zweite Ausgangsknoten einen Wert $o_2$ für die Wahrscheinlichkeit für eine zeitlich nicht-stationäre Verteilungsfunktion angibt. Aus den beiden Werten, die addiert nicht notwendigerweise 1 ergeben, kann eine echte Wahrscheinlichkeit $p_{stat}$ für eine stationäre Verteilung ermittelt werden anhand von $p_{stat} = o_1 / (o_1 + o_2)$. Die Wahrscheinlichkeit $p_{nonstat}$ für das Vorliegen einer nicht-stationären Verteilung ist die inverse Wahrscheinlichkeit zu $p_{stat}$, also $p_{nonstat} = 1 - p_{stat} = o_2 / (o_1 + o_2)$.

In einer alternativen Ausgestaltung kann das erste neuronale Netzwerk 225 auch über einen einzelnen Ausgangsknoten verfügen, der direkt die Wahrscheinlichkeit für beispielsweise eine stationäre Verteilung $p_{stat}$ angibt.

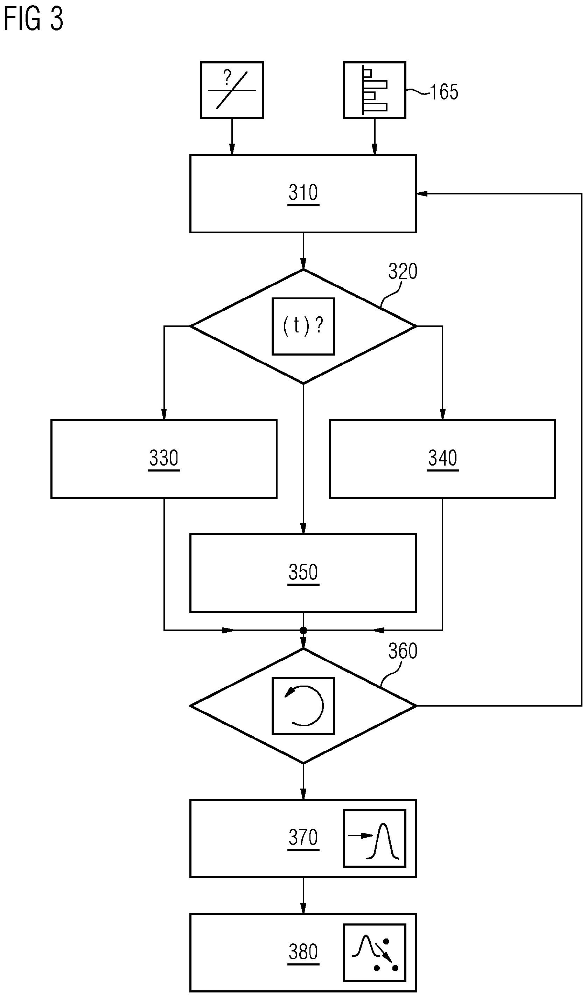

Der ermittelte erste Datensatz und die Wahrscheinlichkeit für eine stationäre Verteilung $p_{stat}$ (und/oder $p_{nonstat}$) werden in einem Verfahren weiterverwendet, das in Figur 3 schematisch dargestellt ist.

In dem Verfahren gemäß Figur 3 werden wieder, wie in dem Verfahren gemäß Figur 1, alle Verteilungsfunktionen der vorgegebenen Menge aus Verteilungsfunktionen betrachtet.

In einem ersten Schritt 310 wird eine bisher noch nicht betrachtete (erste oder nächste) Verteilungsfunktion $f_i(x)$; i = 1 ... Nv aus der Menge der Verteilungsfunktionen herangezogen. Für diese wird in einem zweiten Schritt 320 abgefragt, ob sie zeitlich stationär ist, zeitlich nicht-stationär ist, oder einen Mischtyp darstellt. Diese Information ist bereits fest hinterlegt für jede Verteilungsfunktion in der Menge der Verteilungsfunktionen, kann also direkt abgerufen werden.

Ist die aktuell betrachtete Verteilungsfunktion $f_i$(x) zeitlich stationär, wird in einem dritten Schritt 330 der erste Wahrscheinlichkeitswert $p_{1,i}$, der in dem Verfahren nach Figur 1 für diese Verteilungsfunktion ermittelt wurde und Teil des ersten Datensatzes ist, mit der im Verfahren nach Figur 2 ermittelten Wahrscheinlichkeit multipliziert, die angibt, dass die Messwerte einer zeitlich stationären Quelle entstammen ($p_{stat}$). Der so erhaltene Wert ist eine Bewertungsgröße $w_i = p_{stat} \cdot p_{1,i}$ für diese Verteilungsfunktion.

Ist dagegen die aktuell betrachtete Verteilungsfunktion $f_i$(x) zeitlich nicht-stationär, wird in einem vierten Schritt 340 der erste Wahrscheinlichkeitswert $p_{1,i}$ mit der im Verfahren nach

Figur 2 ermittelten Wahrscheinlichkeit multipliziert, die angibt, dass die Messwerte einer zeitlich nicht-stationären Quelle entstammen ($p_{nonstat} = 1 - p_{stat}$). Der so erhaltene Wert ist wieder die Bewertungsgröße $w_i = p_{nonstat} \cdot p_{1,i} = (1 - p_{stat}) \cdot p_{1,i}$ für diese Verteilungsfunktion.

Ist schließlich die aktuell betrachtete Verteilungsfunktion $f_i$(x) eine Mischform, beispielsweise zeitlich blockweise stationär, dann wird im fünften Schritt 350 keine weitere Modifikation für den ersten Wahrscheinlichkeitswert $p_{1,i}$ vorgenommen und die Bewertungsgröße entspricht direkt dem ersten Wahrscheinlichkeitswert, $w_i = p_{1,i}$.

In einem sechsten Schritt 360 wird geprüft, ob bereits alle Verteilungsfunktionen aus der Menge der Verteilungsfunktionen betrachtet wurden. Ist das nicht der Fall, wird zum ersten Schritt 310 zurückgekehrt und die nächste Verteilungsfunktion betrachtet.

Ist für alle Verteilungsfunktionen $f_i$(x) eine Bewertungsgröße $w_i$ ermittelt, dann wird in einem siebten Schritt 370 diejenige Verteilungsfunktion $f_a$(x) ausgewählt, die die größte Bewertungsgröße aufweist, $w_a = max(w_i)$.

Die so ausgewählte Verteilungsfunktion $f_a$(x) wird in der hier beschriebenen Vorgehensweise als die Verteilungsfunktion angesehen, die die Messdaten $m_i$ am besten beschreiben kann. Um die konkrete Verbindung zu den Messdaten $m_i$ herzustellen, werden nun in einem achten Schritt 380 die Parameter der Verteilungsfunktion $f_a$(x) bestimmt. Das passiert in dem vorliegenden Beispiel mit einer Maximum-Likelihood-Schätzung. Vorteilhaft werden die Parameter also nur für die ausgewählte Verteilungsfunktion $f_a$(x) bestimmt und nicht etwa für alle Verteilungsfunktionen.

Bezugszeichen

101 Zeitreihe von Messwerten
165 erster Datensatz
110-150 Schritte
151 zweites neuronales Netzwerk
210-230 Schritte
215 Vektor von normierten Messwerten
225 erstes neuronales Netzwerk
310-380 Schritte

**Patentansprüche**

1.  Verfahren zur Bestimmung einer statistischen Verteilungsfunktion und zur Bestimmung von Parametern für die Verteilungsfunktion, mit denen eine Zeitreihe (101) von Messdaten darstellbar ist, bei dem

    - für eine vorgegebene Menge von statistischen Verteilungsfunktionen für jede Verteilungsfunktion eine erste Wahrscheinlichkeit (165) dafür bestimmt wird, dass die Messdaten eine Verteilung entsprechend dieser Verteilungsfunktion aufweisen,
    - eine zweite Wahrscheinlichkeit bestimmt wird, dass die Messdaten einer zeitlich stationären Quelle entstammen,
    - für die vorgegebene Menge von Verteilungsfunktionen für jede Verteilungsfunktion aus der zugeordneten ersten Wahrscheinlichkeit, aus einer zeitlichen Veränderlichkeit der Verteilungsfunktion und der zweiten Wahrscheinlichkeit eine Bewertungsgröße für die jeweilige Verteilungsfunktion bestimmt wird,
    - anhand der Bewertungsgröße eine Verteilungsfunktion aus der Menge der Verteilungsfunktionen als passende Verteilungsfunktion für die Messdaten ausgewählt wird,
    - Parameter für die Darstellung der Messdaten für die ausgewählte Verteilungsfunktion ermittelt werden.

2.  Verfahren nach Anspruch 1, bei dem für eine Verteilungsfunktion die Bewertungsgröße derart bestimmt wird, dass

    - falls die Verteilungsfunktion eine zeitlich nicht-stationäre Verteilungsfunktion ist, ihre erste Wahrscheinlichkeit mit der zweiten Wahrscheinlichkeit multipliziert wird, um die Bewertungsgröße zu erhalten,
    - falls die Verteilungsfunktion eine zeitlich stationäre Verteilungsfunktion ist, ihre erste Wahrscheinlichkeit mit der inversen zweiten Wahrscheinlichkeit multipliziert wird, um die Bewertungsgröße zu erhalten,
    - andernfalls die erste Wahrscheinlichkeit verwendet wird, um die Bewertungsgröße zu erhalten.

**3.** Verfahren nach Anspruch 1, bei dem die zweite Wahrscheinlichkeit unter Verwendung eines ersten neuronalen Netzwerks (225) bestimmt wird.

**4.** Verfahren nach Anspruch 1, bei dem mittels einer Abtastung aus der Zeitreihe ein Messdatenvektor ermittelt wird, dessen Anzahl von Elementen der Anzahl der Eingangsknoten des ersten neuronalen Netzwerks (225) entspricht.

**5.** Verfahren nach Anspruch 1, bei dem das erste neuronale Netzwerk (225) mit einer Mehrzahl von Datensätzen trainiert wird, von denen ein erster Teil zufällig ermittelte Werte einer zeitlich stationären statistischen Verteilungsfunktion enthält und von denen ein zweiter Teil zufällig ermittelte Werte einer zeitlich nicht-stationären Verteilungsfunktion enthält.

**6.** Verfahren nach Anspruch 1, bei dem eine Kerndichteschätzung für die Messdaten durchgeführt wird.

**7.** Verfahren nach Anspruch 1, bei dem das Ergebnis der Kerndichteschätzung als Eingangsgröße für ein zweites neuronales Netzwerk verwendet wird, dessen Ausgangswerte die ersten Wahrscheinlichkeiten sind.

**8.** Verfahren nach Anspruch 1, bei dem für die Kerndichteschätzung die Scott-Bandbreite als Kerndichte verwendet wird.

**9.** Verfahren nach Anspruch 1, bei dem die Parameter mit einer Maximum-Likelihood-Schätzung ermittelt werden.

**10.** Verfahren nach Anspruch 1, bei dem die Messdaten vor der Verarbeitung normalisiert werden.

**11.** Verfahren nach Anspruch 1, bei dem das Ergebnis der Kerndichteschätzung ein Datenvektor mit einer Anzahl von Elementen ist, die der Intervallbreite zwischen kleinstem und größtem Messwert geteilt durch eine gewählte Bandbreite ist und die Anzahl der Eingangsknoten des zweiten neuronalen Netzwerks dieser Anzahl von Elementen entspricht.

**12.** Verfahren nach Anspruch 1, bei dem die Anzahl der Ausgangsknoten des zweiten neuronalen Netzwerks der Anzahl von Verteilungsfunktionen in der vorgegebenen Menge von Verteilungsfunktionen entspricht.

**13.** Vorrichtung zur Bestimmung einer statistischen Verteilungsfunktion und zur Bestimmung von Parametern für die Verteilungsfunktion, mit denen eine Zeitreihe von Messdaten darstellbar ist, eingerichtet zur Durchführung des Verfahrens nach einem der vorangehenden Ansprüche.

FIG 1

101

110    [ 0; 1 ]

120

130

140

150    151

165

FIG 2

FIG 3

Europäisches Patentamt

European Patent Office

Office européen des brevets

# EUROPÄISCHER RECHERCHENBERICHT

Nummer der Anmeldung

EP 24 21 8360

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | SIQI LIU ET AL: "DynaConF: Dynamic Forecasting of Non-Stationary Time-Series", ARXIV.ORG, CORNELL UNIVERSITY LIBRARY, 201 OLIN LIBRARY CORNELL UNIVERSITY ITHACA, NY 14853, 13. November 2023 (2023-11-13), XP091657235, Abschnitte 3 und 4; * Zusammenfassung; Abbildungen 1, 2 * | 1-13 | INV. G06F17/18 |
| A | DE 10 2020 203796 A1 (FRAUNHOFER GES FORSCHUNG [DE]) 30. September 2021 (2021-09-30) * Absatz [0053] - Absatz [0054]; Abbildungen 1, 12 * | 1-13 | |
| A | MINWOO CHAE ET AL: "A likelihood approach to nonparametric estimation of a singular distribution using deep generative models", ARXIV.ORG, CORNELL UNIVERSITY LIBRARY, 201 OLIN LIBRARY CORNELL UNIVERSITY ITHACA, NY 14853, 30. August 2021 (2021-08-30), XP091025468, * sections 4 and 5 * | 1-13 | RECHERCHIERTE SACHGEBIETE (IPC) G06F |

Der vorliegende Recherchenbericht wurde für alle Patentansprüche erstellt

| Recherchenort | Abschlußdatum der Recherche | Prüfer |
|---|---|---|
| Berlin | 5. Mai 2025 | Virnik, Elena |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 21 8360

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-05-2025

| Im Recherchenbericht angeführtes Patentdokument | Datum der Veröffentlichung | Mitglied(er) der Patentfamilie | Datum der Veröffentlichung |
|---|---|---|---|
| DE 102020203796 A1 | 30-09-2021 | DE 102020203796 A1 | 30-09-2021 |
| | | US 2021302548 A1 | 30-09-2021 |

EPO FORM P0461

Für nähere Einzelheiten zu diesem Anhang : siehe Amtsblatt des Europäischen Patentamts, Nr.12/82